# FASCICULE DE BREVET EUROPEEN

(11) **EP 0 592 296 B1**
(45) Date de publication et mention de la délivrance du brevet: **15.05.1996**
(21) Numéro de dépôt: 93402431.6
(22) Date de dépôt: 04.10.1993
(51) Int. Cl.: G21C 5/02, G21C 7/08, G21C 7/117

(54) **Equipements internes de réacteur nucléaire à guides de grappe de commande**
Kernreaktoreinbauten mit Steuerstabführungen
Nuclear reactor internals with control rod guides

(30) Priorité: 05.10.1992 FR 9211764
(43) Date de publication de la demande: 13.04.1994
(73) Titulaire: FRAMATOME, F-92400 Courbevoie (FR)
(72) Inventeur: Bougis, Jean-Claude, F-92400 Courbevoie (FR)
(74) Mandataire: Fort, Jacques

(56) Documents cités:
- EP-A- 0 188 163
- EP-A- 0 266 593
- EP-A- 0 456 562
- EP-A- 0 467 093
- FR-A- 2 591 018

## Description

La présente invention concerne les équipements internes supérieurs pour réacteur nucléaire et elle trouve une application particulièrement importante dans les réacteurs refroidis et modérés par de l'eau.

Elle concerne plus particulièrement les équipements internes surmontant le coeur d'un réacteur nucléaire, ayant une plaque inférieure percée d'ouvertures de sortie du réfrigérant hors du coeur, une plaque supérieure, des colonnes entretoises reliant les plaques, et des guides de grappe destinés à des grappes de commande déplaçables verticalement entre une position où elles sont insérées dans le coeur et une position où elles sont extraites de ce dernier, certains au moins de ces guides ayant chacun un tronçon supérieur faisant saillie au-dessus de la plaque supérieure et un tronçon inférieur s'étendant entre les plaques et placé dans une colonne entretoise respective.

Les guides de grappe comportent en général, à la partie haute, un tube le long duquel sont réparties des plaques transversales guidant individuellement les crayons et, à la partie basse, des tubes fendus affectés chacun à un crayon et des fourreaux affectés chacun à deux crayons.

Des équipements de ce genre sont décrits par exemple dans le document EP-A-0 456 562 ou EP-A-0 592 289. La présente invention vise notamment à fournir des équipements permettant une mise en place et un remplacement simple des guides de grappe placés dans des colonnes.

Dans ce but l'invention propose notamment des équipements du type ci-dessus définis dans lesquels chacun desdits guides constitue une cartouche insérable dans une colonne, munie d'une bride de fixation à la plaque supérieure munie à sa partie basse de moyens élastiques de centrage dans la colonne.

Le tronçon inférieur du guide comportera en général plusieurs longerons verticaux reliant la bride de fixation à des plaques transversales de guidage des crayons de grappe, des tubes fendus et des fourreaux de guidage des crayons dans la partie basse du tronçon inférieur. Les moyens élastiques peuvent alors être constitués par des lames élastiques longitudinales disposées verticalement régulièrement réparties angulairement ; ces lames peuvent par exemple constituer la partie terminale de certains au moins des longerons, être disposées entre eux, être disposées dans leur prolongement s'ils se terminent avant le bas. Ces moyens peuvent même être des lames élastiques encastrées dans un socle du guide et faisant saillie vers le haut.

Dans un premier mode de réalisation, le tronçon supérieur du guide a une constitution similaire à celle du tronçon inférieur et les équipements supérieurs comportent, au-dessus des colonnes, des capots fixés à la plaque supérieure et enfermant chacun un desdits tronçons supérieurs. Dans un autre mode de réalisation, le tronçon supérieur constitue un tel capot.

L'invention sera mieux comprise à la lecture de la description qui suit de modes particuliers d'exécution, donnés à titres d'exemples non limitatifs. La description se réfère aux dessins qui l'accompagnent, dans lesquels :
- la figure 1 est une vue simplifiée, en coupe verticale, de la partie supérieure d'un réacteur auquel peut être appliquée l'invention ;
- la figure 2 est une vue en coupe suivant la ligne II-II des figures 3 à 6 montrant, à grande échelle, un dispositif de guidage suivant un mode de réalisation de l'invention applicable au réacteur de la figure 1, et
- les figures 3 à 6 sont des vues en coupe suivant les lignes III-III, IV-IV, V-V et VI-VI de la figure 2 ;
- la figure 7 est une vue de détail à grande échelle d'une fraction de la partie basse de la figure 2, c'est-à-dire en coupe suivant la ligne II-II de la figure 6 ;
- les figures 8 et 9 sont respectivement des vues de lames élastiques suivant un mode particulier de réalisation, en coupe suivant la ligne VIII-VIII de la figure 7 et d'un patin d'appui, suivant la ligne IX-IX de la figure 7 ;
- les figures 10, 11 et 12, similaires à la figure 7, montrent des variantes de réalisation ;
- la figure 13 est une vue de détail à grande échelle montrant un mode possible de réalisation des moyens de fixation du tronçon supérieur du guide et du capot ;
- la figure 14, similaire à la figure 2, montre une variante de réalisation ;
- les figures 15 et 16 sont des vues en coupe suivant les lignes XV-XV et XVI-XVI de la figure 14.

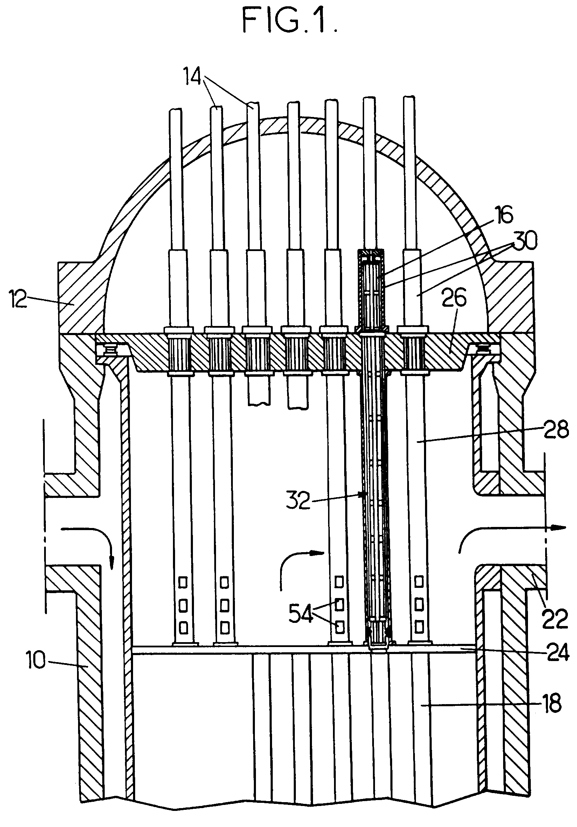

L'invention sera décrite, à titre d'exemple, dans son application à un réacteur à eau sous pression du genre montré en figure 1, qui comporte une cuve 10 de résistance à la pression de l'eau constituant réfrigérant et modérateur. La cuve est fermée par un couvercle 12 qui porte les mécanismes 14 de déplacement des grappes de commande dont une seule 16 est représentée. La cuve 10 contient le coeur 18, formé par juxtaposition d'assemblages ayant chacun un squelette et un faisceau de crayons combustibles répartis suivant un réseau régulier, carré ou triangulaire. Le squelette des assemblages comporte des tubes de guidage (non représentés) dans lesquels peuvent coulisser des crayons absorbants appartenant aux grappes de commande (ou éventuellement à des grappes de variation du spectre d'énergie des neutrons).

Le coeur est surmonté d'un ensemble, généralement mécano-soudé, qu'on désigne par le terme d'équipements internes supérieurs. Cet ensemble remplit plusieurs fonctions. Il collecte le débit d'eau à haute température sortant du coeur vers le haut et le dévie vers la tubulure ou les tubulures 22 de sortie de la cuve 10. Il retient les assemblages combustibles du coeur 18. Enfin, il guide les grappes de commande 16 équipant certains au moins des assemblages, au cours de leur déplacement vertical.

Les équipements internes supérieurs montrés en figure 1 comportent une plaque inférieure 24, qui reçoit la poussée des assemblages soumis à l'écoulement de l'eau sous pression, et une plaque supérieure 26 qui reporte la résultante des forces appliquées à l'ensemble des équipements internes supérieurs sur la cuve 10 et son couvercle 12. Les plaques 24 et 26 sont reliées par des colonnes entretoises 28 tubulaires.

Des guides de grappe sont prévus à la verticale de chaque mécanisme 14. Chaque guide de grappe peut être considéré comme comprenant un tronçon supérieur 30 et un tronçon inférieur 32. Les tronçons inférieurs 32 sont contenus dans des colonnes entretoises 28 correspondantes. Les tronçons supérieurs font saillie au-dessus de la plaque supérieure 26, qu'on peut regarder comme une plaque support des guides de grappe.

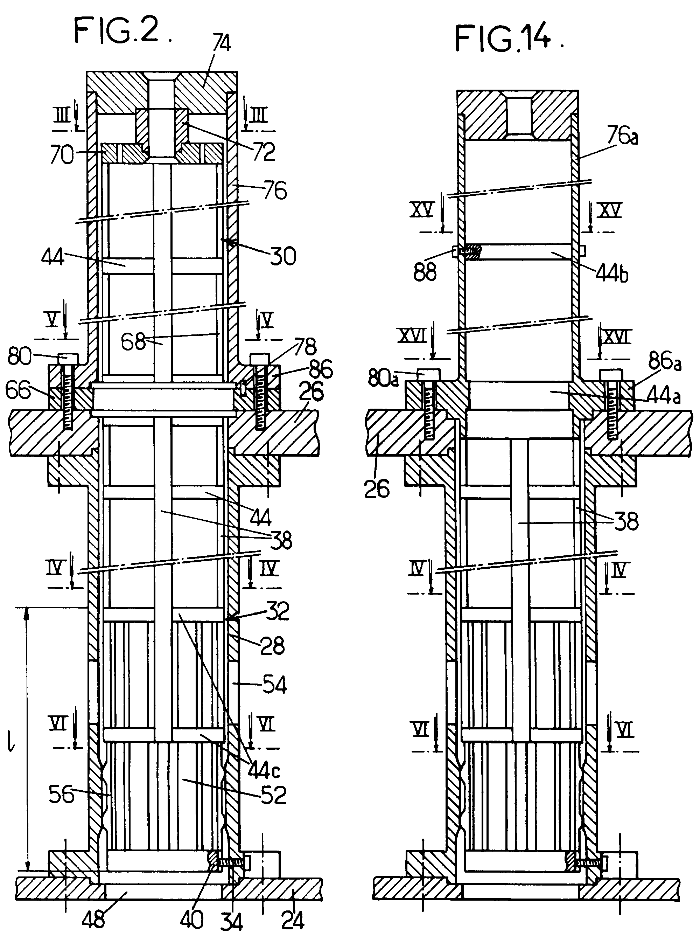

Les deux tronçons du mode de réalisation dont la constitution générale est montrée en figures 2 à 6 constituent une cartouche monolithique insérable en bloc en le descendant dans une colonne. Cette cartouche a un squelette se terminant en bas par une embase ou plaque de guidage basse 40 munie de moyens d'indexage destinés à donner au squelette une orientation angulaire déterminée au moyen du pion 34 dans la colonne. Le squelette comprend :
- plusieurs longerons ou membrures verticaux 38, régulièrement répartis angulairement, au nombre de quatre par exemple,
- plusieurs plaques transversales 44 régulièrement réparties, présentant une découpe correspondant à la répartition des crayons absorbants dans la grappe de commande et reliées par les longerons 38,
- une bride de transition 66, destinée à être fixée sur la plaque supérieure 26 (contre la face tournée vers le haut de la plaque 26 dans le cas illustré sur la figure 2).

Dans le mode de réalisation illustré les deux plaques transversales 44 basses et l'embase 40 sont reliées par des tubes fendus et des fourreaux 52 de guidage des crayons de la grappe, protégeant ces crayons contre l'écoulement du réfrigérant et se substituant aux longerons entre la plaque 44 la plus basse 44c et l'embase 40. Ces fourreaux et tubes fendus guident de façon continue les crayons de grappe sur la longueur 1 (figure 2). Le guidade des crayons est au contraire discontinu dans la partie du tronçon inférieur démunie de fourreau et de tube fendu, et dans le tronçon supérieur.

Toujours dans le mode de réalisation de l'invention montré en figure 2, chacune des colonnes support 28 disposée autour d'un tronçon inférieur 32 se termine par des brides dont l'une est fixée à la face tournée vers le bas de la plaque supérieure 26 et l'autre est fixée à la plaque inférieure 24, par exemple par des vis. Le réacteur est prévu pour que le réfrigérant sortant des assemblages traverse des passages 48 percés dans la plaque 24, chacun aligné avec un assemblage, et les embases 40, des ouvertures 54 ou ouïes sont ménagées à la partie basse des colonnes.

Chaque tronçon inférieur 32 de guide de grappe suivant l'invention est relié à la colonne respective par des moyens élastiques de centrage de la partie basse du tronçon (et dans certains cas de centrage d'une partie intermédiaire) et par des moyens d'orientation.

Dans le cas illustré sur la figure 2, les moyens d'orientation forment un clavetage coulissant de l'embase 40 sur la colonne 28 et sont constitués par un pion 34 qui s'engage dans une rainure verticale de l'embase 40.

Les moyens élastiques de centrage peuvent avoir des constitutions très diverses.

Dans les modes de réalisation illustrés, ils comportent des lames élastiques longitudinales disposées verticalement et régulièrement réparties angulairement, s'étendant entre la plaque transversale 44 la plus basse 44c et l'embase 40. Les lames représentées sont disposées dans le prolongement des longerons 38 et sont radialement en alignement avec les fourreaux destinés à guider deux crayons à la fois. Mais cette disposition n'est pas la seule possible.

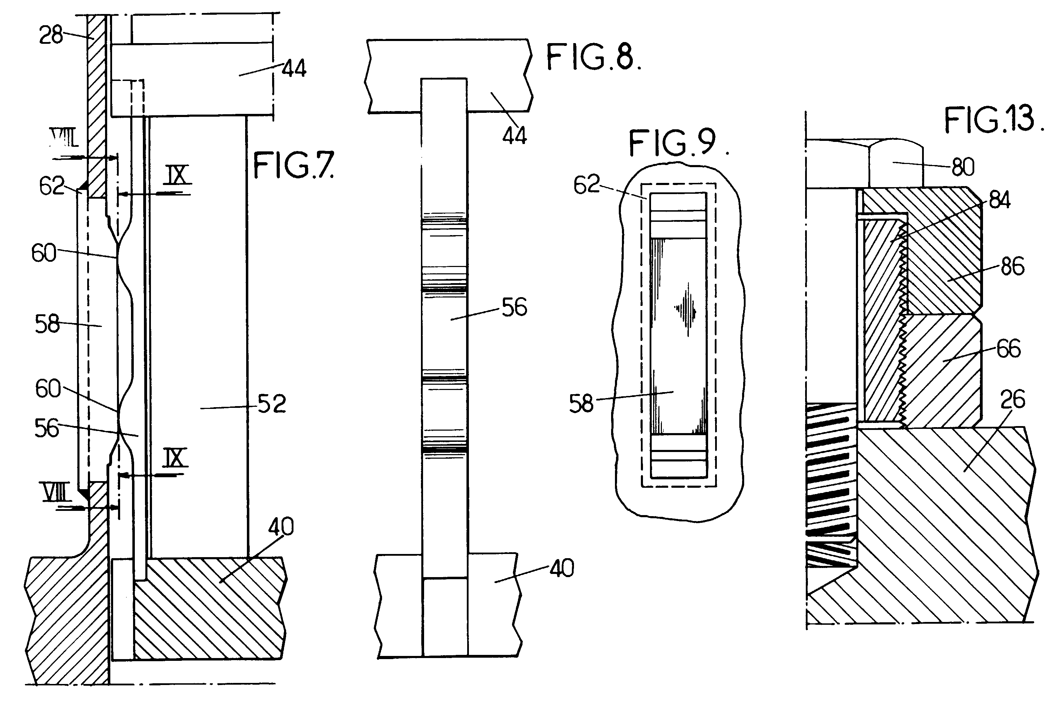

Les moyens illustrés sur les figures 2, 7, 8 et 9 comprennent quatre lames élastiques 56 fixées au tronçon inférieur et des patins respectifs d'appui 58 montés sur la colonne entretoise 28. Les extrémités de chaque lame 56 ont une liaison d'encastrement l'une avec la plaque transversale 44 la plus basse 44c, l'autre avec l'embase 40. Pour cela ces lames peuvent être soudées à leurs extrémités dans des encoches. On voit sur la figure 7 que la lame 56, sous l'effet d'un effort horizontal, peut se déformer, jusqu'à venir en contact et en appui dans sa partie centrale avec le fourreau 52, ce qui constitue une butée et limite le déplacement latéral de la cartouche. Dans sa partie déformable, chaque lame 56 présente deux bossages 60 d'appui sur un patin respectif 58. Les patins peuvent être montés dans des fentes ou rainures de la colonne entretoise 28 et présenter un rebord arrière 62 de soudage contre la paroi externe de la colonne entretoise 28.

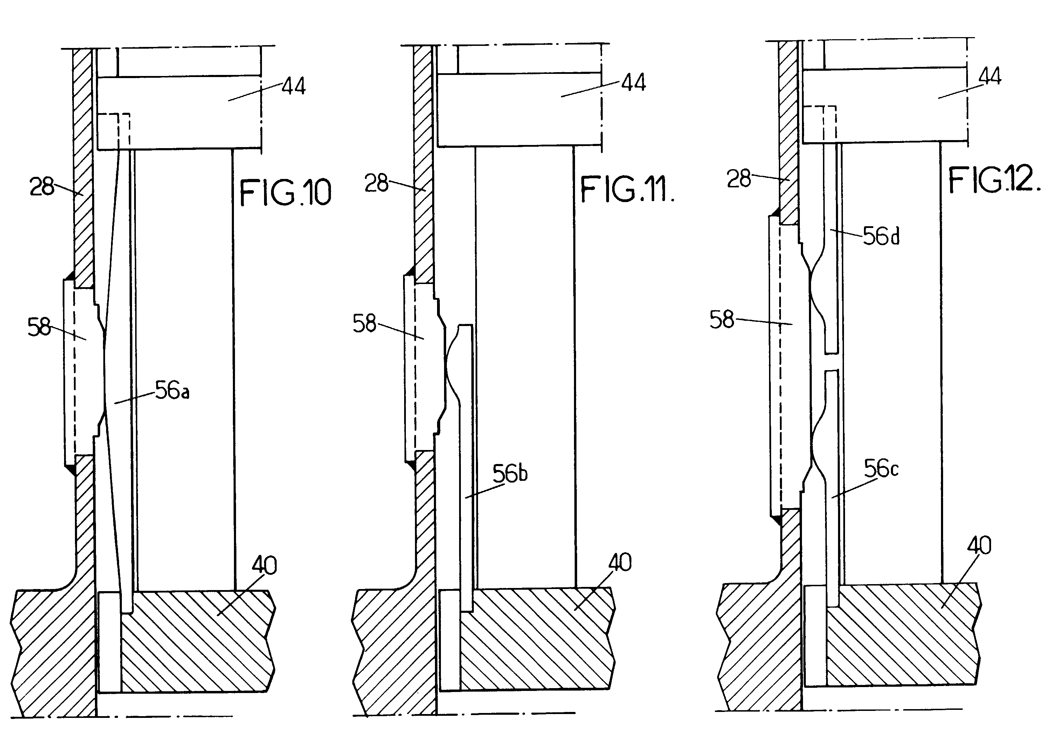

Dans la variante de réalisation montrée en figure 10, où les organes correspondant à ceux de la figure 7 portent le même numéro de référence, la lame flexible 56a est encore encastrée à ses deux extrémités dans la plaque 44 la plus basse 44c et dans l'embase 40 mais sa section est différente, en forme de triangle très aplati ayant un méplat terminal 64 d'appui sur le patin 58.

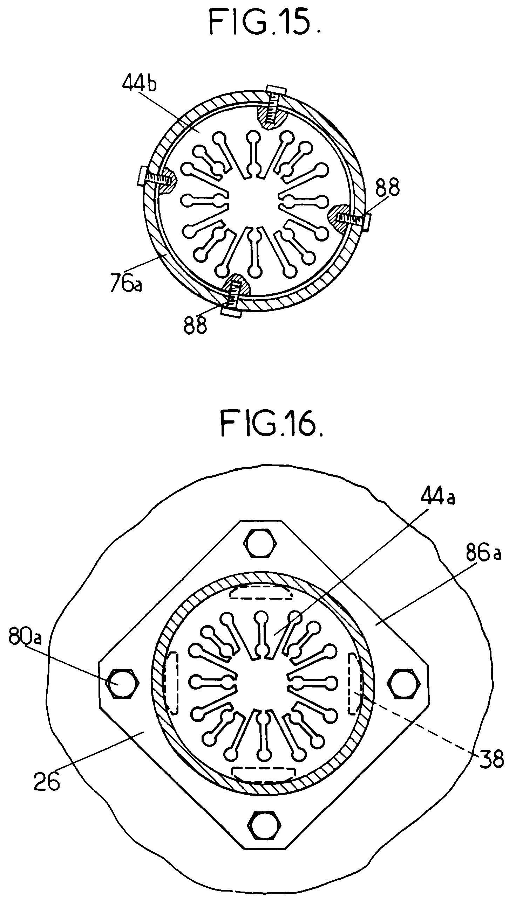

Dans le cas illustré sur la figure 11, les lames élastiques 56b sont encastrées uniquement dans l'embase 40 et montées en porte-à-faux.

Enfin, dans le mode de réalisation montré en figure 12, les moyens élastiques comportent deux jeux de lames. Les lames 56c d'un des jeux ont une liaison d'encastrement avec l'embase 40. Les lames 56d de l'autre jeu ont une liaison d'encastrement avec la plaque transversale de guidage 44c la plus basse. Les lames 56c et 56d peuvent être disposées symétriquement et être munies chacune d'un seul bossage d'appui sur le patin 58.

Des moyens élastiques de guidage du même genre que ceux montrés en figures 7 à 12 peuvent être placés également sur d'autres plaques transversales 44, de façon à avoir un guidage réparti le long du tronçon inférieur.

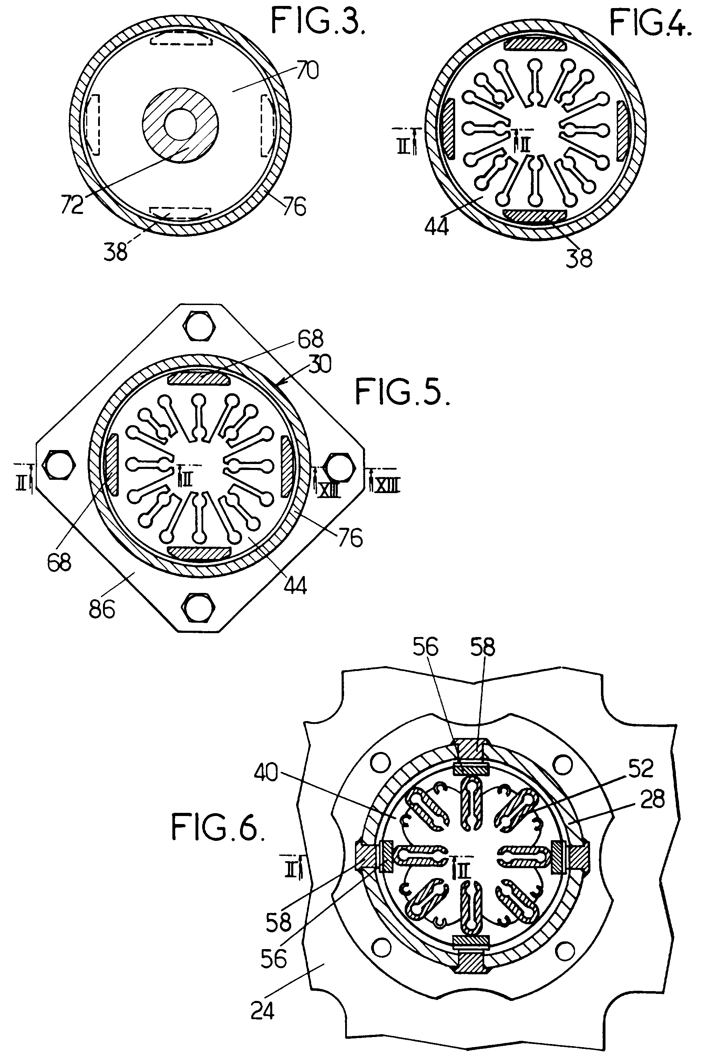

Toutes les dispositions décrites jusqu'ici sont utilisables non seulement dans le mode de réalisation montré en figure 2, mais aussi dans celui de la figure 14 dont le tronçon inférieur ne sera en conséquence pas décrit de nouveau. Les figures 4 et 6 peuvent en conséquence être considérées aussi bien comme des coupes aux niveau IV-IV et VI-VI de la figure 14 qu'aux niveaux correspondants de la figure 2.

En revanche, le tronçon supérieur du mode de réalisation montré en figure 2 est différent de celui montré en figure 14.

Dans le cas montré en figure 2, le tronçon supérieur est relié au tronçon inférieur de façon à constituer un ensemble monolithique par une bride de transition 66 destinée à s'appliquer contre la face supérieure de la plaque supérieure 26. Des longerons 68 sont disposés dans le prolongement des longerons 38 et relient également des plaques 44c entre elles et avec une plaque haute 70 munie d'un centreur 72. Ce centreur est destiné à s'engager dans une plaque de logement 74 appartenant à un capot 76 fixé à la bride de transition 66 et à la plaque supérieure 26.

Les moyens de fixation du capot et de la bride de transition peuvent avoir diverses dispositions. Dans le cas illustré sur la figure 2, le capot est centré sur la bride 66 par un ou plusieurs pions d'orientation 78 et des vis 80 fixent simultanément la bride de transition et la bride du capot sur la plaque 26. Il peut cependant être plus avantageux de solidariser les brides avant mise en place d'un ensemble intégré guide de grappe-capot. On peut pour cela utiliser la disposition montrée en figure 13 qui comporte des douilles filetées 84 ayant une tête d'appui sur un épaulement de la bride 86 de capot et une partie filetée destinée à se visser dans un taraudage de la bride de transition 66. Les vis 80 de fixation dans la plaque 26 traversent alors un trou lisse prévu dans la douille 84.

Dans le mode de réalisation montré en figure 14, le capot 76a est intégré au guide de grappe. Dans ce cas, les longerons 38 s'arrêtent au niveau d'une plaque transversale 44a qui remplace la bride de transition. Les plaques transversales de guidage 44b prévues dans le tronçon supérieur sont directement fixées sur la paroi latérale du capot 76a, par exemple par des vis ou des pions emmanchés 88, comme le montrent les figures 14 et 15.

Dans ce cas, l'ensemble du guide de grappe peut être fixé à l'aide de la bride 86a du capot, à l'aide de vis 80a qui s'engagent directement dans la plaque 26 (figures 14 et 16).

Quel que soit le mode de réalisation adopté, on voit qu'il autorise un positionnement précis du guide de grappe à l'intérieur d'une colonne entretoise tout en offrant une grande facilité de montage et de démontage. Lors de la descente de la cartouche dans la colonne entretoise, les lames, qui présentent au repos une saillie supérieure à celle qui autorise l'insertion, fléchissent lorsqu'elles viennent en contact avec les patins. L'appui élastique assuré par les lames est complété par l'appui de butée de l'arrière de la lame sur le fourreau en cas de chocs violents, par exemple dus à un séisme. Enfin, un guide de grappe suivant l'invention peut aisément être substitué à un guide de grappe dans un réacteur existant muni de colonnes entretoises.

## Revendications

1. Equipements internes surmontant le coeur d'un réacteur nucléaire, ayant une plaque inférieure (24) percée d'ouvertures de sortie du réfrigérant du coeur, une plaque supérieure (26), des colonnes entretoises (28) reliant les plaques, et des guides destinés à des grappes de commande déplaçables verticalement entre une position où elles sont insérées dans le coeur et une position où elles sont extraites de ce dernier, certains au moins de ces guides ayant chacun un tronçon supérieur (30) faisant saillie au-dessus de la plaque supérieure (26) et un tronçon inférieur (32) s'étendant entre les plaques et placé dans une colonne entretoise respective (28),
caractérisés en ce que chacun desdits guides de grappe constitue une cartouche monolithique insérable dans une colonne respective (28), munie d'une bride (66,86a) de fixation à la plaque supérieure (26) et munie à sa partie basse de moyens élastiques (56,56a,56b,56c,56d) de centrage dans la colonne.

2. Equipements selon la revendication 1, caractérisés en ce qu'au moins le tronçon inférieur du guide de grappe comporte plusieurs longerons verticaux (38) reliant la bride de fixation à des plaques transversales (44) de guidage de crayons de grappe et en ce que ledit tronçon inférieur comporte des fourreaux et des tubes fendus de guidage des crayons dans sa partie basse.

3. Equipements selon la revendication 2, caractérisés en ce que le tronçon supérieur (30) de chaque guide a la même constitution que le tronçon inférieur et en ce que les équipements supérieurs comportent, au-dessus des colonnes, des capots (76) fixés à la plaque supérieure (26) et enfermant chacun un desdits tronçons supérieurs.

4. Equipements selon la revendication 3, caractérisés en ce que le tronçon supérieur (30) est relié au tronçon inférieur de façon à constituer un ensemble monolithique par une bride de transition (66) constituant bride de fixation et destinée à s'appliquer contre la face supérieure de la plaque supérieure (26) et en ce que des longerons (68) disposés dans le prolongement des longerons (38) du tronçon inférieur relient les plaques transversales de guidage (44) du tronçon supérieur entre elles et avec une plaque haute (70) munie d'un centreur (72) destiné à s'engager dans une plaque de logement (74) appartenant au capot (76).

5. Equipements selon la revendication 2, caractérisés en ce que le tronçon supérieur (30) comporte un capot fixé à la plaque supérieure (26) et dans lequel sont fixées des plaques transversales de guidage discontinu (44b).

6. Equipements selon l'une quelconque des revendications 2 à 5, caractérisés en ce que les moyens élastiques sont constitués par des lames élastiques longitudinales régulièrement réparties angulairement, éventuellement disposées entre les longerons du tronçon inférieur ou dans leur prolongement.

7. Equipements selon la revendication 6, caractérisés en ce que des patins (58) d'appui des lames sont fixés à chaque colonne entretoise.

8. Equipements selon la revendication 6 ou 7, caractérisés en ce qu'une des extrémités desdites lames élastiques (56) a une liaison d'encastrement avec la plaque transversale la plus basse (44c) et en ce que l'autre extrémité a une liaison d'encastrement avec une embase (40) du tronçon inférieur.

9. Equipements selon la revendication 6 ou 7, caractérisés en ce que les lames (56c) d'un premier jeu ont une liaison d'encastrement avec une embase (40) du tronçon inférieur et en ce que les lames (56d) d'un autre jeu ont une liaison d'encastrement avec la plaque transversale de guidage la plus basse (44c), les lames étant munies chacune d'un bossage d'appui.

10. Equipements selon l'une quelconque des revendications précédentes, caractérisés en ce que la déflexion des moyens élastiques est limitée par l'appui éventuel du fourreau sur la faxe arrière de la lame élastique.

## Patentansprüche

1. Obere Einbauten oberhalb des Kerns eines Kernreaktors mit einer unteren Platte (24), die Öffnungen für den Austritt des Kühlmittels aus dem Kern aufweist, einer oberen Platte (26), Verstrebungssäulen (28), die die Platten verbinden, und Führungen für Steuerstabbündel, die vertikal zwischen einer Position, in der sie in den Kern eingeführt sind, und einer Position, in der sie aus dem Kern herausgezogen sind, verschiebbar sind, wobei wenigstens bestimmte der Führungen einen oberen Abschnitt (30) aufweisen, der über die obere Platte (26) übersteht, und einen unteren Abschnitt (32) aufweisen, der sich zwischen den Platten erstreckt und jeweils in einer Verstrebungssäule (28) angeordnet ist,
**dadurch gekennzeichnet**, daß jede Führung eine jeweils in eine Säule (28) einführbare monolithische Kartusche darstellt, die mit einem Flansch (66, 86a) zur Befestigung an der oberen Platte (26) versehen ist und in ihrem unteren Bereich mit elastischen Einrichtungen (56, 56a, 56b, 56c, 56d) zur Zentrierung in der Säule versehen ist.

2. Einbauten nach Anspruch 1, dadurch gekennzeichnet, daß wenigstens der untere Abschnitt der Führung mehrere vertikale Träger (38) umfaßt, die den Befestigungsflansch mit Querplatten (44) zum Führen der Stäbe des Bündels verbinden, und daß der untere Abschnitt in seinem unteren Bereich Hülsen und geschlitzte Rohre zum Führen der Stäbe aufweist.

3. Einbauten nach Anspruch 2, dadurch gekennzeichnet, daß der obere Abschnitt (30) einer jeden Führung denselben Aufbau wie der untere Abschnitt hat, und daß die oberen Einbauten oberhalb der Säulen Abdeckkappen (76) umfassen, die an der oberen Platte (26) befestigt sind und jeweils einen der oberen Abschnitte umschließen.

4. Einbauten nach Anspruch 3, dadurch gekennzeichnet, daß der obere Abschnitt (30) mit dem unteren Abschnitt zu einem monolithischen System durch einen Übergangsflansch (66) verbunden ist, der einen Befestigungsflansch bildet und vorgesehen ist, um an der Oberseite der oberen Platte (26) anzuliegen, und daß in Verlängerung der Träger (38) des unteren Abschnitts angeordnete Träger (68) die Führungs-Querplatten (44) des oberen Abschnitts miteinander und mit einer hohen Platte (70) verbinden, die mit einer Zentriereinrichtung (72) versehen ist, die vorgesehen ist, um in eine zur Abdeckung (76) gehörende Aussparungsplatte (74) einzugreifen.

5. Einbauten nach Anspruch 2, dadurch gekennzeichnet, daß der obere Abschnitt (30) eine an der oberen Platte (26) befestigte Abdeckung umfaßt, in der Querplatten für diskontinuierliche Führung (44b) befestigt sind.

6. Einbauten nach einem der Ansprüche 2 bis 5, dadurch gekennzeichnet, daß die elastischen Einrichtungen durch gleichmäßig winkelverteilte longitudinale Blattfedern gebildet werden, die zwischen den Trägern des unteren Abschnitts oder in deren Verlängerung angeordnet sein können.

7. Einbauten nach Anspruch 6, dadurch gekennzeichnet, daß Kufen (58) zum Andrücken auf die Federn an jeder Verstrebungssäule befestigt sind.

8. Einbauten nach Anspruch 6 oder 7, dadurch gekennzeichnet, daß eines der Enden der Blattfedern (56) eine Steckverbindung mit der untersten Querplatte (44c) und das andere Ende eine Steckverbindung mit einer Fußplatte (40) des unteren Abschnitts hat.

9. Einbauten nach Anspruch 6 oder 7, dadurch gekennzeichnet, daß die Blattfedern (56c) eines ersten Satzes eine Steckverbindung mit einer Fußplatte (40) des unteren Abschnitts und die Blattfedern (56d) eines anderen Satzes eine Steckverbindung mit der untersten Führungs-Querplatte (44c) haben, und daß die Federn jeweils mit einem Andrückvorsprung versehen sind.

10. Einbauten nach einem der vorhergehenden Ansprüche, dadurch gekennzeichnet, daß die Auslenkung der elastischen Einrichtungen durch die Möglichkeit des Andrückens der Hülse an die Rückseite der Blattfeder begrenzt ist.

## Claims

1. Internal equipments located above the core of a nuclear reactor, having a lower plate (24) formed with outlet openings for the core coolant, a higher plate (26), spacer columns (28) interconnecting the plates, and guides for control clusters vertically displaceable between a position in which they are inserted in the core and a position in which they are out of the core, at least some of said guides each having a top length (30) projecting above the higher plate (26) and a bottom length (32) extending between the plates and placed in a respective spacer column (28),
characterized in that each of said cluster guides constitutes a unitary cartridge insertable in a respective column (28), provided with a flange (66, 86a) for connection to the higher plate (26) and provided at its bottom end with resilient means (56, 56a, 56b, 56c, 56d) for centering within the column.

2. Equipments according to claim 1, wherein at least the bottom length of the cluster guide includes a plurality of vertical longitudinal members (38) connecting the flange means to cross plates (44) for guiding the cluster control rods, and said bottom length includes split sleeves and tubes for guiding the rods in a lower portion thereof.

3. Equipments according to claim 2, characterized in that the top length (30) of the guide has the same structure as its bottom length, and said upper equipments include, above the columns, casings (76) fixed to the upper plate (26) and each enclosing one of said top lengths.

4. Equipments according to claim 3, characterized in that the top length (30) is connected to the bottom length to constitute a unitary structure by means of a transition coupling (66) and constructed to bear against the upper face of the upper plate (26) and in that longitudinal members (68) disposed in line with the longitudinal members (38) of the bottom length connect the cross guide plates (44) of the top length mutually and to a top plate (70) provided with a centering (72) designed to engage in a reception plate (74) belonging to the casing (76).

5. Equipments according to claim 2, characterized in that the top length (30) includes a casing fixed to the top plate (26) and in which cross plates (44b) for discontinuous guiding are fixed.

6. Equipments according to any one of claims 2-5, characterized in that the resilient means are constituted by longitudinally extending resilient blades that are uniformly distributed angularly, optionally disposed between the longitudinal members of the bottom length or in alignment therewith.

7. Equipments according to claim 6, characterized in that thrust shoes (58) for engaging the spring blades are fixed to each spacer column.

8. Equipments according to claim 6 or 7, characterized in that one of the ends of said resilient blades (56) is engaged in the lowermost cross plate (44c), and the other end thereof is engaged in a base (40) of the bottom length.

9. Equipments according to claim 6 or 7, characterized in that the blades (56 c) of a first set are engaged in a base (40) of the bottom length, and the blades (56d) of another set are engaged in the lowermost cross guide plate (44c), the blades being each provided with a thrust bulge.

10. Equipments according to any one of the preceding claims, characterized in that the amount of deflection of the resilient means is limited by possible contact of the rear face of the resilient blade with the sleeve.
